Europäisches Patentamt

European Patent Office

Office européen des brevets

(19)

(11) **EP 1 165 332 B1**

(12) **FASCICULE DE BREVET EUROPEEN**

(45) Date de publication et mention
de la délivrance du brevet:
**02.03.2005 Bulletin 2005/09**

(51) Int Cl.⁷: **B60G 15/07**

(21) Numéro de dépôt: **01948965.7**

(22) Date de dépôt: **29.01.2001**

(86) Numéro de dépôt international:
**PCT/EP2001/000917**

(87) Numéro de publication internationale:
**WO 2001/056819 (09.08.2001 Gazette 2001/32)**

(54) **METHODE DE COMPENSATION DU TIRAGE D'UN VEHICULE EQUIPE DE SUSPENSION MACPHERSON**

VERFAHREN ZUM AUSGLEICH VON SEITWÄRTSZIEHEN EINES MIT EINER MC-PHERSON AUFHÄNGUNG AUSGERÜSTETEN FAHRZEUGS

METHOD FOR COMPENSATING THE PULL OF A VEHICLE EQUIPPED WITH A MCPHERSON STRUT SUSPENSION

(84) Etats contractants désignés:
**DE FR GB IT**

(30) Priorité: **01.02.2000 FR 0001392**

(43) Date de publication de la demande:
**02.01.2002 Bulletin 2002/01**

(73) Titulaires:
• **Société de Technologie Michelin**
  **63000 Clermont-Ferrand Cedex 09 (FR)**
• **MICHELIN RECHERCHE ET TECHNIQUE S.A.**
  **CH-1763 Granges-Paccot (CH)**

(72) Inventeurs:
• **DUCLOUX, Antoine**
  **F-58260 La Machine (FR)**

• **AUBAREDE, Francis**
  **F-63200 Pontgibaud (FR)**

(74) Mandataire: **Bauvir, Jacques**
**Michelin & Cie,**
**Service SGD/LG/PI-LAD**
**63040 Clermont-Ferrand Cedex 09 (FR)**

(56) Documents cités:
**US-A- 5 947 459**

• **PATENT ABSTRACTS OF JAPAN vol. 1998, no. 03, 27 février 1998 (1998-02-27) & JP 09 300932 A (TOYOTA MOTOR CORP), 25 novembre 1997 (1997-11-25)**

## Description

La présente invention concerne les dispositifs de suspension de type Mac Pherson montés sur les essieux directeurs des véhicules automobiles, particulièrement les jambes de force et leur rôle dans l'équilibre du système de direction. L'invention concerne plus particulièrement une paire de jambes de force selon le préambule de la revendication 1.

Une telle paire de jambes est connue par exemple de US 5947 459.

L'intérêt de ce type de suspension est qu'il présente un nombre réduit d'éléments et un encombrement limité par rapport à d'autres systèmes. C'est pourquoi son utilisation est très développée sur les véhicules actuels, en particulier sur les véhicules de petites et moyennes dimensions.

Un problème commun à tous les véhicules et pas uniquement ceux équipés d'essieux directeurs Mac Pherson, est celui de la sensibilité aux efforts latéraux du fait de la chasse nécessaire à la stabilité du système de direction.

Cette sensibilité se manifeste en particulier, lorsque le véhicule roule sur une surface inclinée. Les chaussées présentent généralement une inclinaison latérale, appelée " dévers ", destinée à faciliter l'écoulement des eaux. Cette inclinaison induit une force qui tend à dévier les véhicules vers le côté le plus bas de la route, c'est à dire vers l'extérieur. Cette tendance à la déviation, appelée "tirage ", en l'absence de disposition corrective, oblige le conducteur à exercer un effort sur la direction du véhicule pour maintenir une trajectoire rectiligne. Les constructeurs de véhicules et les manufacturiers de pneumatiques tiennent compte de cette tendance lors de la définition du véhicule. C'est ainsi qu'on a conçu des épures de suspensions dissymétriques capables de compenser cette tendance. De même, certaines architectures de pneumatiques permettent de générer un léger tirage qui, s'il est orienté en sens inverse de celui occasionné par le dévers, peut minimiser ou annuler l'effort nécessaire sur le volant pour maintenir une trajectoire rectiligne.

En Europe, la grande majorité des véhicules étant destinée à rouler sur la droite de la chaussée (situation appelée « roulage à droite »), leur conception et/ou leur monte de pneumatiques permettent de compenser ce tirage lié au dévers moyen de la partie droite d'une chaussée. Cependant, pour des raisons économiques, cette configuration n'est, généralement, pas remise en cause dans les parties du marché (comme le Royaume-Uni) ou les véhicules circulent sur la partie gauche de la chaussée (situation appelée « roulage à gauche »). Le problème du tirage lié au dévers de la chaussée devient alors plus aigu car les corrections mises en oeuvre pour compenser le tirage à droite augmentent inéluctablement la tendance au tirage à gauche. Cette situation est inconfortable pour le conducteur qui doit exercer en moyenne, sur la périphérie du volant du véhicule, un effort de l'ordre de 4 Newtons pour maintenir son véhicule en ligne droite. La taille de ces marchés ne justifie cependant pas un développement spécifique d'épures dissymétriques de suspension. De même, les manufacturiers sont réticents à commercialiser localement des pneumatiques induisant un tirage inverse du fait, d'une part, de la faible demande et d'autre part, de la difficulté qu'il y a à contrôler la destination finale des produits dans un marché européen régi par la libre circulation des marchandises.

Cette situation, décrite ici à titre d'illustration, n'est pas limitée au cas du marché européen. D'autres marchés présentent la même problématique ou la problématique inverse. D'autre part, ce qui est décrit ici dans le cas (le plus aigu) de véhicules conçus et équipés pour compenser un tirage est bien entendu tout à fait valable dans le cas d'un véhicule conçu et équipé pour un comportement neutre (sur dévers nul) et qu'on veut adapter au marché du roulage à droite ou à gauche.

Un objectif de l'invention est donc de proposer, pour les véhicules équipés d'essieux directeurs Mac Pherson, une solution afin de compenser le tirage dans une certaine direction et le cas échéant de compenser également l'effet de corrections intégrée à la conception initiale des véhicules pour compenser un tirage dans une direction opposée.

Un deuxième objectif de l'invention est de ne remettre en cause ni la monte de pneumatiques, ni les géométries ou les ressorts de suspensions choisis lors de la conception du véhicule.

Ces objectifs sont atteints par une jambe de force selon la revendication 1.

Certains détails avantageux de l'invention sont définis dans les revendications 2 à 6.

Les variations d'inclinaison ou de position de l'axe d'appui du ressort sur la coupelle inférieure dans un plan perpendiculaire à l'axe de la tige d'amortisseur provoquent une variation de position et de direction de l'axe de poussée du ressort. Si la distance, selon l'axe du véhicule. entre l'axe de cette poussée et l'axe de pivot de la suspension varie, cela génère un couple variable qui tend à faire pivoter la roue directrice autour de son axe de pivot. Si l'autre roue directrice est soumise à un couple d'intensité différente (voire nulle) ou à un couple de même sens (donc non symétrique par rapport au véhicule), la résultante (non nulle) de ces deux couples a tendance à dévier le véhicule. L'invention consiste à utiliser cette résultante pour compenser le tirage.

Plusieurs possibilités sont envisagées pour générer un couple dissymétrique autour de l'axe de pivot à partir du positionnement de l'axe d'appui du ressort sur la coupelle inférieure. On peut décaler longitudinalement l'axe de la coupelle d'une certaine distance et dans un certain sens d'un coté du véhicule et d'une distance différente, dans le même sens ou dans un sens opposé, de l'autre coté du véhicule. Dans le cas de l'adaptation d'un véhicule dont le comportement est connu, on peut également ne modifier que l'une des jambes afin d'introduire cette dissymétrie. Au contraire, on peut obtenir une dissymétrie (et donc une correction) en utilisant des jambes de forces identiques de part et d'autre du véhicule, chacune générant un couple de même sens (donc dissymétrique par rapport au véhicule), ces deux couples coopérant pour compenser le tirage.

L'effet premier obtenu par décalage de la coupelle inférieure peut être obtenu également par une inclinaison de cet appui de coupelle. De la même manière, deux jambes identiques (comportant une coupelle inclinée ou une pièce intermédiaire inclinée) que l'on monte des deux cotés du véhicule génèrent chacune un couple de même sens (donc dissymétrique par rapport au véhicule), ces deux couples s'additionnant pour compenser le tirage.

Selon l'invention, lors de la conception d'un véhicule, on peut l'adapter au roulage à droite (respectivement à gauche) en l'équipant de jambes de force dont le positionnement de coupelle induit un couple autour de l'axe de pivot déviant le véhicule vers la gauche (respectivement la droite). On utilise deux jambes identiques montées de part et d'autre du véhicule Dans ce cas, on fait alors appel à deux modèles de jambes de forces, l'un pour le roulage à gauche et l'autre pour le roulage à droite. On peut également utiliser une seule jambe d'adaptation spécifique à chaque type de roulage montée indifféremment d'un côté ou de l'autre du véhicule.

Prenons maintenant l'exemple d'un véhicule conçu et équipé en pneumatiques pour un comportement neutre en roulage à droite et dont les jambes de forces sont identiques et symétriques, donc ne générant ni l'une ni l'autre de couple autour de l'axe de pivot. L'adaptation de ce véhicule au roulage à droite a été réalisée, par exemple, par une monte de pneumatiques spécifique et/ou par un assemblage légèrement dissymétrique des éléments de suspension. Ce véhicule peut être adapté au roulage à gauche, selon le principe de l'invention, soit en remplaçant l'une de ses jambes de force, soit les deux. Dans le cas du remplacement des deux, on peut utiliser une jambe identique non symétrique de part et d'autre du véhicule. Globalement, ce véhicule fait alors appel à deux jambes de force différentes pour s'adapter au deux types de roulage. Pour des raisons. par exemple. de logistique du marché du remplacement. on préfère utiliser des pièces uniques sur un même marché ou sur une même partie de marché et l'adaptation au roulage à gauche par le changement des deux jambes présente cet avantage.

Un troisième objectif de l'invention est de garantir le meilleur fonctionnement possible de la jambe de force, en particulier en minimisant les efforts tranchants sur sa tige qui génèrent des frottements internes et donc une usure accélérée et des performances réduites de la suspension. Ceci est réalisé par un mode préféré de réalisation de l'invention dans lequel la modification de la position de l'axe de poussée du ressort ne remet pas en question les conditions connues d'effort tranchant minimisé.

Les différents principes de l'invention seront mieux compris à l'aide de la description des figures suivantes :

- Fig 1 : Schéma de principe d'une suspension de type Mac Pherson en vue longitudinale (art antérieur),
- Fig 2 : Schéma de principe d'une suspension de type Mac Pherson en vue latérale (art antérieur),
- Fig 3 : Schéma de principe d'un mode de réalisation de l'invention, en vue latérale,
- Fig 4 : Schéma de principe d'un autre mode de réalisation de l'invention, en vue latérale,
- Fig 5 : Schéma d'une suspension de type Mac Pherson selon l'invention équipant l'essieu d'un véhicule. en vue longitudinale,
- Fig 6 : Schéma d'une suspension de type Mac Pherson selon l'invention équipant l'essieu d'un véhicule. en vue de dessus,

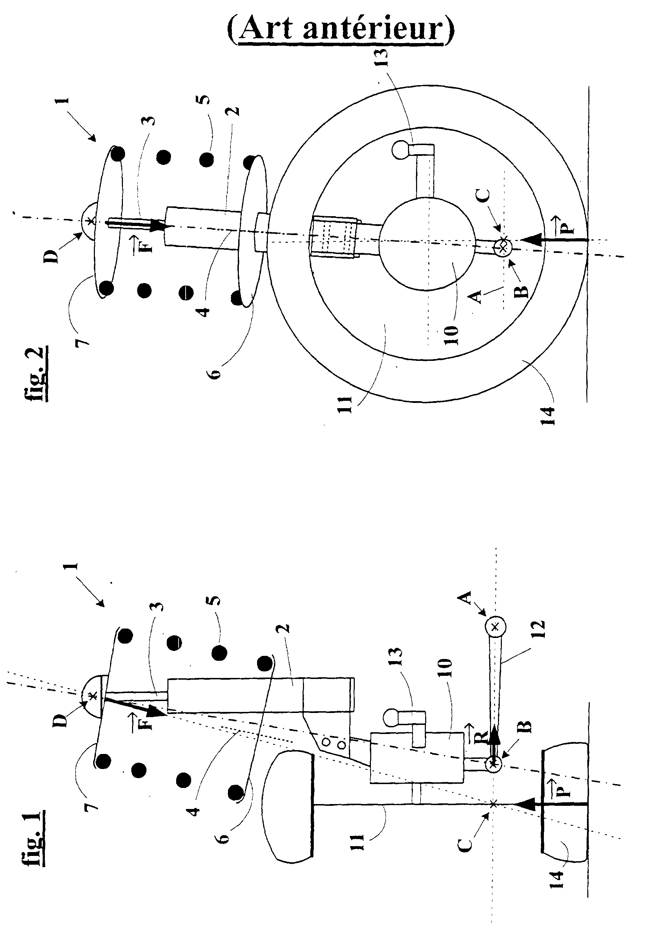

La figure 1 est une vue schématique statique suivant l'axe longitudinal du véhicule d'un dispositif connu de suspension de type Mac Pherson constituant le train avant gauche du véhicule. Une jambe de force (1) comprend un corps (2) et une tige (3). La jambe (1) est fixée par l'intermédiaire d'une chape à un porte-roue (10) qui supporte la roue avant gauche (11) du véhicule. Le porte-roue (10) est lié par un levier (13) au système de direction du véhicule. Le porte-roue (10) est articulé, au point B. à un triangle inférieur (12), lui-même articulé à la caisse du véhicule, suivant un axe A.

Un ressort hélicoïdal (5) assure une poussée $\vec{F}$ entre une coupelle inférieure (6) et une coupelle supérieure (7). La coupelle supérieure (7) s'appuie sur la caisse du véhicule par l'intermédiaire d'une butée à bille (non représentée). La coupelle inférieure (6) comporte un axe d'appui (4) du ressort (5). La tige (3) est articulée, au point D, à la caisse du véhicule. L'axe DB constitue l'axe de pivot de direction autour duquel pivote l'ensemble roue/jambe de force pour guider le véhicule. La roue subit de la part du sol, une force de contact $\vec{P}$ verticale et centrée par rapport au pneumatique (14). Le point C se situe à l'intersection du plan AB et de la droite d'action de la force de contact $\vec{P}$. Une condition de bon fonctionnement d'une jambe de force est que l'axe de poussée du ressort soit le plus proche possible de ce point C pour limiter au maximum les efforts tranchants sur la tige (3) et donc les frottements. C'est pourquoi, on incline l'axe du ressort par rapport à l'axe de la tige (3). L'équilibre des forces s'exerçant sur le dispositif de suspension s'écrit sous forme vectorielle, $\vec{F} + \vec{P} + \vec{R} = 0$.

La figure 2 est une vue schématique statique suivant l'axe transversal du véhicule du même dispositif connu de suspension de type Mac Pherson de la figure 1. L'observateur voit le train avant gauche de la figure 1 depuis l'extérieur du véhicule. La tige (3) et le corps (2) de la jambe de force (1) sont sensiblement parallèles à l'axe de pivot DB. L'axe de pivot est incliné, dans le plan longitudinal, d'un angle faible (angle de chasse) par rapport à la verticale. Si l'angle de chasse n'est pas nul (cas le plus fréquent), cette inclinaison fait que le point C n'est pas aligné avec l'axe de pivot DB. L'axe de poussée du ressort est généralement aligné avec l'axe de pivot. La position et l'orientation des coupelles (inférieure (6) et supérieur (7) sont généralement symétriques par rapport au corps (2) de l'amortisseur afin de pouvoir utiliser un jambe de force identique de part et d'autre de l'essieu directeur. Cette jambe de force identique est généralement montée avec des porte-roues différents. L'axe d'appui (4) du ressort sur la coupelle inférieure est donc aligné avec l'axe de pivot DB dans cette vue afin de limiter sa distance au point C.

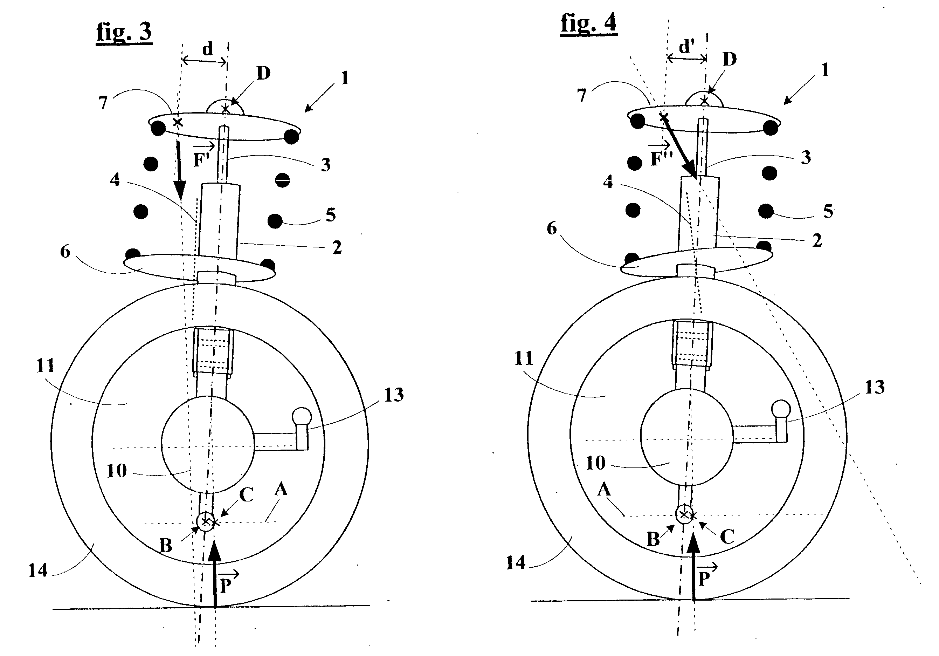

La figure 3 représente un mode de réalisation de l'invention. Cette vue est similaire à celle de la figure 2. La coupelle inférieure (6) est décalée par rapport au corps (2) de la jambe vers l'avant du véhicule. L'axe d'appui (4) du ressort (5) est également décalé vers l'avant, sa projection sur un plan médian du véhicule est sensiblement parallèle à celle de l'axe de pivot DB. Cette modification change l'axe de la poussée ($\vec{F}'$) du ressort (5) qui est distante longitudinalement d'une distance (d) de l'axe de pivot DB au niveau de la coupelle supérieur (7). Ceci permet de générer un couple autour de l'axe de pivot BD qui tend à faire pivoter la jambe et donc la roue (11). Le véhicule équipé d'une telle jambe a tendance à dévier (sur sol horizontal) vers la droite. Alternativement. en décalant la coupelle (donc son axe d'appui) vers l'arrière du véhicule (pour une roue avant gauche), on obtient l'effet inverse, le véhicule équipé d'une telle jambe a tendance à dévier (sur sol horizontal) vers la gauche.

La figure 4 représente un autre mode de réalisation de l'invention. Cette vue est similaire à celle de la figure 2. La coupelle inférieure (6) est inclinée par rapport au corps (2) de la jambe, la partie arrière de la coupelle se trouve plus haute que la partie avant. Les projections, sur un plan médian du véhicule, de l'axe d'appui (4) du ressort (5) sur la coupelle (6) et de l'axe de pivot (DB) sont sécantes. Cette inclinaison de l'axe d'appui (4) du ressort (5) sur la coupelle (6) écarte l'axe de la poussée ($\vec{F}''$) du ressort (5) longitudinalement d'une distance (d') de l'axe de pivot (DB) au niveau de la coupelle supérieure (7). Ceci permet de générer un couple autour de l'axe de pivot (DB) qui tend à faire pivoter la jambe et donc la roue (11). Le véhicule équipé d'une telle jambe a tendance à dévier (sur sol horizontal) vers la droite. Alternativement, en inclinant la coupelle à l'inverse, le véhicule équipé d'une telle jambe a tendance à dévier (sur sol horizontal) vers la gauche. Cette inclinaison de l'axe d'appui de coupelle peut également être obtenue par l'interposition d'une cale biaise entre le ressort et la coupelle.

Parmi ces deux modes de réalisation de l'invention, celui de la figure 3 est un mode préféré car c'est celui qui apporte le meilleur fonctionnement de la jambe par la minimisation des efforts tranchants sur la tige du fait de la distance réduite entre l'axe de poussée et le point C. On pourra également utiliser une combinaison de ces deux modes pour balayer toutes les valeurs nécessaires de correction de tirage dans les meilleures conditions de fonctionnement possible, c'est à dire en orientant l'axe de poussée du ressort au plus près du point C. La détermination, pour une configuration de roulage, de la position idéale moyenne de l'axe d'appui (4) de ressort sur la coupelle inférieure peut se faire à l'aide d'un banc de mesure tel que décrit dans le document EP0780250.

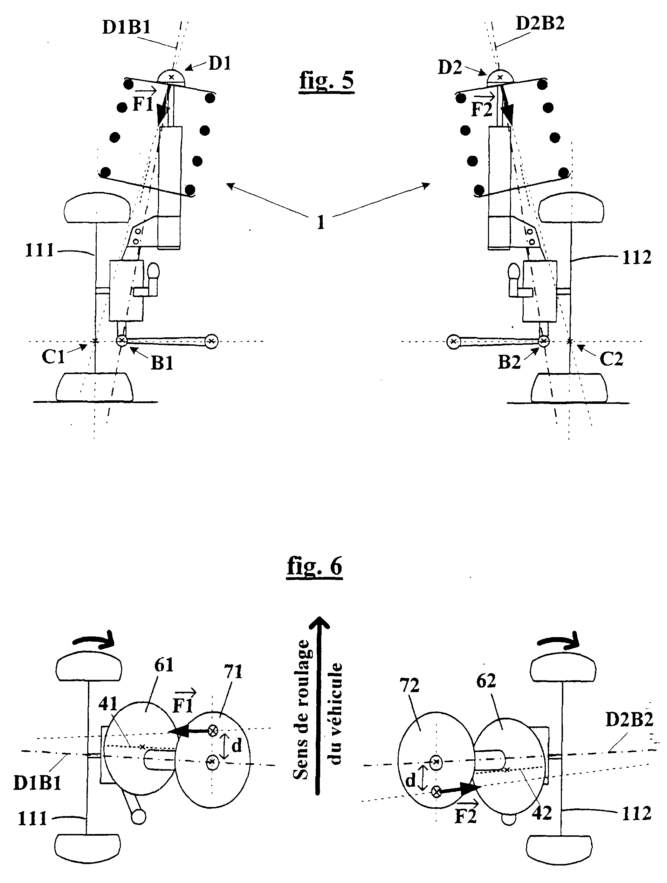

Les figures 5 et 6 sont deux vue de la situation d'un véhicule équipé de part et d'autre d'une jambe de force identique et telle que représentée à la figure 3. Sur la figure 5, vue depuis l'arrière du véhicule, on ne détecte aucune dissymétrie, les axes des poussées ($\vec{F}1$, $\vec{F}2$) sont coplanaires avec les plans contenant les points caractéristiques C1 et D1, respectivement C2 et D2. La figure 6 représente schématiquement les mêmes éléments du même véhicule en vue de dessus. On visualise sur cette vue la distance d séparant les axes des poussées ($\vec{F}1$, $\vec{F}2$) des axes de pivot (D1B1, D2B2) à hauteur des coupelles supérieures (71, 72). On visualise également la dissymétrie qu'entraîne le montage d'un jambe identique de part et d'autre du véhicule. Ainsi, l'axe d'appui (41, 42) du ressort sur la coupelle inférieure (61, 62) est décalé vers l'avant du coté gauche du véhicule et vers l'arrière du coté droit du véhicule. De ce fait, les roues (111, 112) subissent un couple qui tend à les faire pivoter et à dévier le véhicule vers la droite de la chaussée. La somme de ces deux actions permet de corriger une tendance au tirage à gauche. Cette configuration peut compenser l'effet d'un dévers de roulage à gauche, et le cas échéant, compenser des dispositions correctives introduites, lors de la conception du véhicule, pour combattre les effets d'un dévers de roulage à droite. Suivant les véhicules, une distance (d, d') de l'ordre de 5 à 15 mm permet de générer le couple recherché dans le cas envisagé. Cette distance peut être obtenue par un déport de l'axe d'appui de ressort sur la coupelle inférieure de l'ordre de 6 à 20 mm. Dans le cas d'une inclinaison de l'axe d'appui de ressort (figure 4), un angle de l'ordre de 6 à 20 degrés peut conférer un effet équivalent.

Les réalisations des figures 3 à 6 concernent plus particulièrement une méthode et des moyens de compensation d'un tirage à gauche. Bien entendu, la compensation d'un tirage à droite se fait par la même méthode et par des moyens équivalents mais dont l'action est orientée à l'inverse.

**Revendications**

1.   Paire de jambes de force destinée à équiper une suspension de type Mac Pherson de part et d'autre d'un essieu directeur d'un véhicule automobile, chacune desdites jambes (1) comportant un amortisseur pourvu d'un c orps ( 2) e t d'une t ige ( 3), c hacune d esdites jambes é tant d estinée à recevoir un ressort hélicoïdal (5) entourant ladite tige (3), chacune desdites jambes comportant une coupelle inférieure (6, 61, 62) solidaire dudit corps (2), ledit ressort (5) exerçant entre ladite coupelle inférieure (6, 61, 62) et une coupelle supérieure (7, 71, 72) une poussée (F', F'', F1, F2), ladite poussée (F', F'', F1, F2) générant un couple autour d'un axe de pivot de ladite suspension, **caractérisées en ce que**, ledit couple est dissymétrique, par rapport a un plan médian dudit véhicule, d'un couple généré au sein de l'autre jambe de force de ladite paire, cette dissymétrie étant la conséquence d'une dissymétrie, par rapport à un plan médian dudit véhicule, de la position par rapport audit corps (2) de ladite coupelle inférieure (6, 61, 62) de chaque jambe de force et dans laquelle les deux jambes sont identiques, non symétriques.

**2.** Paire de jambes selon la revendication 1 dans laquelle ladite dissymétrie de la position de ladite coupelle inférieure est obtenue par un décalage longitudinal de ladite coupelle.

**3.** Paire de j ambes selon la revendication 2 dans laquelle une projection sur ledit plan médian de l'axe d'appui (4, 41, 42) dudit ressort (5) sur ladite coupelle inférieure (6, 61, 62) est sensiblement parallèle à une projection sur ledit plan médian de l'axe de ladite tige.

**4.** Paire de jambes selon l'une des revendications précédentes dans laquelle le décalage longitudinal de l'axe d'appui est compris entre 6 et 20 mm.

**5.** Paire de jambes selon la revendication 1 dans laquelle ladite dissymétrie de la position de ladite coupelle inférieure est obtenue par une dissymétrie d'inclinaison desdites coupelles inférieures.

**6.** Paire de jambes selon la revendication 5 dans laquelle l'inclinaison de l'axe d'appui (4, 42, 42) dudit ressort (5) sur ladite coupelle inférieure (6, 61, 62) est comprise entre 6 et 20 degrés.

## Claims

**1.** A pair of struts intended to equip a suspension of the MacPherson type on either side of a steering axle of an automotive vehicle, each of the said struts (1) having a shock absorber provided with a body (2) and a rod (3), each of the said struts being intended to receive a helical spring (5) surrounding the said rod (3), each of the said struts having a lower plate (6, 61, 62) integrally formed on the said body (2), the said spring (5) exerting between the said lower plate (6, 61, 62) and an upper plate (7, 71, 72) a thrust (F', F'', F1, F2), the said thrust (F', F'', F1, F2) generating a torque about a pivot axis of the said suspension, **characterised in that** the said torque is non-symmetrical with respect to a centre plane of the said vehicle to a torque generated within the other strut of the said pair, this non-symmetry being the result of a non-symmetry with respect to a centre plane of the said vehicle of the position relative to the said body (2) of the said lower plate (6, 61, 62) of each strut, and the two struts being identical and not symmetrical.

**2.** A pair of struts according to Claim 1, in which the said non-symmetry of the position of the said lower plate is obtained by a longitudinal offset of the said plate.

**3.** A pair of struts according to Claim 2, in which a projection onto the said centre plane of the bearing axis (4, 41, 42) of the said spring (5) on the said lower plate (6, 61, 62) is substantially parallel to a projection onto the said centre plane of the axis of the said rod.

**4.** A pair of struts according to one of the preceding claims, in which the longitudinal offset of the bearing axis is between 6 and 20 mm.

**5.** A pair of struts according to Claim 1, in which the said non-symmetry of the position of the said lower plate is obtained from a non-symmetry of the incline of the said lower plates.

**6.** A pair of struts according to Claim 5, in which the incline of the bearing axis (4, 42, 42) of the said spring (5) on the said lower plate (6, 61, 62) is between 6 and 20 degrees.

## Patentansprüche

**1.** Federbeinpaar, das eine Aufhängung vom Mac Pherson-Typ auf beiden Seiten einer Vorlaufachse eines Kraftfahrzeugs ausstatten soll, wobei jedes Federbein (1) einen Dämpfer aufweist, der mit einem Körper (2) und einer Stange (3) ausgestattet ist, wobei jedes Federbein dazu vorgesehen ist, eine Schraubenfeder (5) aufzunehmen, die die Stange (3) umgibt, wobei jedes Federbein einen unteren Federteller (6, 61, 62) aufweist, der mit dem Körper (2) fest verbunden ist, wobei die Feder (5) zwischen dem unteren Federteller (6, 61, 62) und einem oberen Federteller (7, 71, 72) eine Druckkraft (F', F'', F1, F2) ausübt, wobei die Druckkraft (F', F'', F1, F2) ein Drehmoment um eine Lenkachse der Aufhängung **dadurch gekennzeichnet, dass**

das Drehmoment in Bezug auf eine Medianfläche des Kraftfahrzeugs unsymmetrisch zu einem Drehmoment ist, das in dem anderen Federbein des Paars erzeugt wird, wobei diese Unsymmetrie die Konsequenz einer auf eine Medianebene des Fahrzeugs bezogenen Unsymmetrie der Position des unteren Federtellers (6, 61, 62) jedes Federbeins in Bezug auf den Körper (2) ist und wobei die beiden Federbeine identisch und nicht symmetrisch sind.

2. Federbeinpaar nach Anspruch 1, wobei die Unsymmetrie der Position des unteren Federtellers durch Verschieben des Federtellers in Längsrichtung erzielt wird.

3. Federbeinpaar nach Anspruch 2, wobei eine Projektion der Achse der Montage (4, 41, 42) der Feder (5) auf dem unteren Federteller (6, 61, 62) auf die Medianebene in etwa parallel zur Projektion der Achse der Stange auf die Medianebene ist.

4. Federbeinpaar nach einem der vorhergehenden Ansprüche, wobei die Längsverschiebung der Montageachse im Bereich von 6 bis 20 mm liegt.

5. Federbeinpaar nach Anspruch 1, wobei die Unsymmetrie der Position des unteren Federtellers durch eine Unsymmetrie in den Neigungen der unteren Federteller erzielt wird.

6. Federbeinpaar nach Anspruch 5, wobei die Neigung der Montageachse (4, 41, 42) der Feder (5) auf dem unteren Federteller (6, 61, 62) im Bereich von 6 bis 20°C liegt.

# (Art antérieur)

fig. 2

fig. 1

fig. 4

fig. 3

fig. 5

fig. 6